# EUROPÄISCHE PATENTANMELDUNG

(11) **EP 3 153 350 A1**
(43) Veröffentlichungstag der Anmeldung: **12.04.2017**
(21) Anmeldenummer: 16191118.5
(22) Anmeldetag: 28.09.2016
(51) Int. Cl.: B60P 7/15

(54) **LADEBALKEN**

(30) Priorität: 09.10.2015 DE 102015117235; 10.11.2015 DE 102015119317
(71) Anmelder: allsafe Jungfalk GmbH & Co. KG, 78234 Engen (DE)
(72) Erfinder: Pietrek, Daniel, 78234 Engen (DE)
(74) Vertreter: Patentanwälte und Rechtsanwalt Weiß, Arat & Partner mbB

(57) **Zusammenfassung**

Die Erfindung betrifft einen Ladebalken (1) für Laderäume oder -flächen zum Verfahren und reversiblem Anordnen in bzw. an einer Airline-Schiene (5, 5.1, 5.2, 5.4, 5.5), bestehend aus einem Lastprofil (2) und einem in dem Lastprofils (2) teleskopförmig angeordneten Teleskopelement (3, 3.1, 3.2), wobei das Teleskopelement (3, 3.1, 3.2) einen schwenkbaren Gleitkopf (4, 4.1, 4.2, 4.4, 4.5) umfasst, wobei der Gleitkopf (4, 4.1, 4.2, 4.4, 4.5) einen Gleitschuh (6, 6.1, 6.2) ausbildet, wobei der Gleitschuh (6, 6.1, 6.2) derart gestaltet ist, dass er in der Führung der Airline-Schienen (5, 5.1, 5.2, 5.4, 5.5) zu verfahren ist, wobei der Gleitschuh (6, 6.1, 6.2) des Gleitkopfs (4, 4.1, 4.2, 4.4, 4.5) ein Gleitstück (19, 19.1, 19.2, 19.3) umfasst.

## Beschreibung

Die Erfindung betrifft einen Ladebalken nach dem Oberbegriff des Anspruchs 1.

### STAND DER TECHNIK

Aus dem Stand der Technik sind Ladebalken für Laderäume bzw. Ladeflächen bekannt. An den Wänden solcher Laderäume bzw. Ladeflächen sind eine Mehrzahl von Schienen, zumeist sogenannte Airline-Schienen vorgesehen. Diese sind gegenüberliegend und parallel zueinander angeordnet. Zwischen zwei gegenüberliegenden Schienen bzw. Airline-Schienen kann oder können je nach Bedarf ein oder auch eine Mehrzahl von Ladebalken eingebracht werden. Die Ladebalken werden mit ihren Enden in die Schienen eingeschoben und in der gewünschten Position eingerastet. Nachteiligerweise ist das Verstellen der Ladebalken über ihre entsprechenden Enden in den Schienen bzw. Airline-Schienen zumeist schwergängig, hakelig und es kommt regelmässig zu Funktionsstörungen. Dies beeinträchtigt und erschwert die Handhabung und verlängert den Ein- und Ausbau der Ladebalken bei dem Be- und Entladen erheblich.

Derartige Ladebalken sind beispielsweis aus der DE 202007013481 U1 bekannt.

In der US 2007/0224010 A1 wird ein weiterer Ladebalken zum Verfahren und Festlegen in bzw. an einer Schiene in einem Laderaum gezeigt, der aus einer Lastaufnahme und zwei seitlichen, in den Schienen laufenden Schuhen besteht. Die Schuhe können an den waagrecht verlaufenden Schienen festgelegt werden.

Aus der EP 0 130 663 A1 ist ein Ladebalken bekannt, bei dem sich am Ende einer Lastaufnahme ein seitlich drehbarer Schuh befindet, der beim Drehen in entsprechende seitliche Ausnehmungen der Schiene eingreifen kann.

Aus der US 6 739 811 B1 ist ein Ladebalken bekannt, bei dem ein Schuh, welcher mit einer Lastklinke in einer Schiene festgelegt ist, über ein Zwischenstück mit einer Lastaufnahme verbunden ist, wobei dieses Zwischenstück, das mit dem Schuh gelenkig verbunden ist, in der Lastaufnahme etwa senkrecht zur Schiene verschiebbar ist.

### OFFENBARUNG DER ERFINDUNG

### AUFGABE

Die Aufgabe der vorliegenden Erfindung ist es, die Nachteile des Standes der Technik zu überwinden. Insbesondere soll eine Vorrichtung bereitgestellt werden, welche das Laufverhalten von Ladebalken in Verbindung mit entsprechenden Schienen verbessert.

### LÖSUNG DER AUFGABE

Zur Lösung der Aufgabe führen die Merkmale des Anspruchs 1.

Herkömmliche Ladebalken werden über einen in irgendeiner Art ausgeformten Schuh an beiden Seiten in bzw. an diesbezügliche vorgesehenen Schienen, die in einem Laderaum oder einer Ladefläche angeordnet sind, festgelegt. Um die erwünschte Festlegungsposition zu erreichen, werden die Schuhe, nachdem sie in die Schiene eingesetzt wurden, verschoben. Dies ist wie oben beschrieben zum Teil nur mit erheblichen Aufwand möglich.

Um die Positionierung eines Ladebalkens in und an einer Schiene, vorzugsweise einer Airline-Schiene, zu verbessern, umfasst der erfindungsgemässe Ladebalken beidseitig an seinen teleskopierbaren Teleskopelementen einen Gleitkopf.

Dieser Gleitkopf ist vorteilhafterweise schwenkbar am Ladebalken bzw. den Teleskopelementen des Ladebalkens angeordnet. Die Schwenkbarkeit, welche zweckmässigerweise durch die Verwendung einer Bolzen-Schrauben-Kombination zugelassen wird, ermöglicht die flexible Positionierung des Ladebalkens und erleichtert das Einsetzen bzw. den Ausbau beim Be- und Entladen. Zudem ist darüber hinaus denkbar, dass der Ladebalken aufgrund der Teleskopierbarkeit und dem schwenkbaren Gleitkopf nicht nur waagerecht oder senkrecht, sondern ggf. auch schräg eingesetzt, bzw. verschoben werden kann.

Zweckmässigerweise ist der Gleitkopf mit wenigen Handgriffen austauschbar, sodass der Ladebalken einfach an unterschiedliche Airline-Schienen oder andere Schienensysteme angepasst werden kann.

Vorteilhafterweise verfügt der Gleitkopf über einen gefederten Fixierelement. Wird dieses Fixierelement durch eine leichten Fingerdruck angezogen und gehalten, ist der Gleitkopf entsperrt und kann in der entsprechenden Airline-Schiene verschoben und entsprechend der Anforderungen positioniert werden. Wird das Fixierelement losgelassen, rastet der Gleitkopf in der nächst möglichen Position der Airline-Schiene ein. Dies ermöglicht eine einfache, schnelle und sehr sichere Handhabung des Ladebalkens ohne die Zuhilfenahme von Werkzeug.

Das Fixierelement verfügt über ein Lager, über welches er mittels einer Bolzen-Schrauben-Kombination zwischen zwei Haltwänden des Gleitkopfs beweglich gehalten wird. Die gleiche Bolzen-Schrauben-Kombination hält auch den Gleitkopf mit seinen Haltewänden zwischen zwei Verbindungsteilen. Diese sind wiederum über mehrere Verbindungselemente mit dem Teleskopelement verbunden.

Das Teleskopelement ist zweckmässigerweise teleskopierbar im Lastprofil angeordnet. Zusammen bilden die genannten Elemente den erfindungsgemässen Ladebalken aus. Durch die Teleskopierbarkeit des Teleskopelements zu dem Lastprofil kann die Länge des Ladebalkens an unterschiedliche räumliche oder nutzerdefinierte Vorgaben angepasst werden.

Zweckmässigerweise umfasst der Gleitkopf einen Gleitschuh. In einem Ausführungsbeispiel ist dieser Gleitschuh T-förmig gestaltet und an die entsprechende Ausformung der Airline-Schiene angepasst. Je nachdem, ob eine Airline-Schiene oder eine andere Schiene zum Einsatz kommt, kann der Gleitschuh unterschiedlich ausgeformt sein.

Bei dem erfindungsgemässen Ladebalken sind an dem Gleitschuh des Gleitkopfes zwei ebenfalls erfindungsgemässe Gleitstücke angeordnet.

Diese Gleitstücke sind vorzugsweise derart an dem Gleitschuh angeordnet, dass es bei korrektem Einsatz nicht zu einem direkten Kontakt zwischen Gleitkopf bzw. Gleitschuh und Airline-Schiene kommt. Die Gleitstücke, vorzugsweise zwei pro Gleitkopf, bilden eine Art Gleitmantel um den Gleitschuh und erhöhen und optimieren dadurch das Laufverhalten des Gleitkopfes in und an der Airline-Schiene.

Zweckmässigerweise umschliessen zwei Gleitstücke den schmalsten Teil des Gleitschuhs und sind in einem bevorzugten Ausführungsbeispiel vorteilhafterweise über ein Haken-Ösen-System verbunden. Dazu sind an den Gleitstücken, jeweils gegenüberliegend, ein Haken bzw. eine Öse ausgebildet. Haken und Ösen des jeweiligen Gleitstücks sind derart angeordnet, dass sie beim Umgreifen des schmalsten Teils des Gleitschuhs jeweils der Haken eines ersten Gleitstücks in die Öse eines zweiten Gleitstücks greift, und umgekehrt. Dadurch entsteht eine formschlüssige reversible Verbindung.

Die Gleitstücke sind aus einem tribologisch vorteilhaften Werkstoff, vorzugsweise aus einem Kunststoff wie POM (Polyoxymethylen). POM zeichnet sich durch eine hohe Festigkeit, Härte und Steifigkeit in einem weiten Temperaturbereich aus. Es behält seine hohe Zähigkeit bis zu einer Temperatur von -40°C, weist eine hohe Abriebfestigkeit, einen niedrigen Reibungskoeffizienten, eine hohe Wärmeformbeständigkeit, gute Gleiteigenschaften, gute elektrische und dielektrische Eigenschaften sowie eine geringe Wasseraufnahme auf.

Für eine passgenaue und stabile Anordnung der Gleitstücke an dem Gleitschuh, weist letzterer diesbezügliche Ausnehmungen auf. Diese ermöglichen eine anforderungsbedingte Platzierung und Stabilisierung der Gleitstücke am Gleitschuh des Gleitkopfes.

Die Verbindung zwischen zwei Gleitstücken über das Haken-Ösen-System ermöglicht einen Formschluss um den Teil des Gleitschuhs, der mit einer Airline-Schiene in Reibungskontakt kommen würde. Darüber hinaus ist diese Verbindung bei Bedarf wieder lösbar, sodass nach längerem Gebrauch die verschlissenen Gleitstücke mit wenigen Handgriffen ausgewechselt werden können.

In einem anderen Ausführungsbeispiel wird ein Clipssystem verwendet, um die Gleitstücke zu verbinden und am Gleitschuh zu halten. Dieses Clipssystem basiert auf ineinandergreifenden Angeln.

Einer der grossen Vorteile des erfindungsgemässen Ladebalkens mit den Gleitstücken ist, dass bei ihrer Verwendung das Laufverhalten des Gleitkopfes bzw. des Gleitschuhs in einer Airline-Schiene sehr leichtgängig ist. Die Gefahr des Verkeilens oder anderer Laufbehinderungen wird damit auf ein Minimum reduziert. Dies zeigt sich umso mehr, als dass es nicht mehr zu funktionsbehindernden Abnutzungen am Gleitkopf des Ladebalkens bzw. der Airline-Schiene kommt, was einen weiteren grossen Vorteil darstellt. Die Funktionalität wird daher zudem durch eine deutliche Abnutzungsverminderung der einzelnen Elemente verbessert und verlängert, was zu erheblicher Kostenersparnis führt und einen weiteren grossen Vorteil mit sich bringt.

Darüber hinaus ist das Gleitstück ein Austauschelement, welches sehr kostengünstig, beispielsweise im Spritzgussverfahren, hergestellt wird.

Ein weiterer Vorteil des erfindungsgemässen Ladebalkens ist, dass er aus vergleichsweise sehr wenigen Teilen zusammengesetzt ist. Dadurch ist eine einfache und selbsterklärende Bedienung bei geringer Anfälligkeit für Defekte oder Abnutzungserscheinungen gegeben.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Darstellung eines erfindungsgemässen Ladebalkens 1 welcher zwischen zwei entsprechenden Airline-Schienen 5.1 und 5.2 angeordnet ist,
Figur 2 einen vergrösserten Ausschnitt auf einen Gleitkopf 4.2 des Ladebalkens 1 aus Figur 1,
Figur 3 eine Darstellung eines Gleitkopfes 4 mit angeordnetem Teleskopelement 3 ohne ein Lastprofil 2 und ohne einer der Airline-Schienen 5.1,5.2,
Figur 4 eine Explosionszeichnung der Darstellung aus Figur 3 bei der alle Bestandteile unverdeckt abgebildet sind,
Figur 5 eine schematische Darstellung des Gleitkopfs 4 aus einer Sicht schräg von oben,
Figur 6 eine schematische Darstellung zweier identischer Ausführungsbeispiele eines Gleitstücks 19,
Figur 7 eine schematische Darstellung zweier weiterer identischer Ausführungsbeispiele eines Gleitstucks 19.3,
Figur 8 eine schematische Seitenansicht des Gleitkopfs 4,
Figur 9 eine schematische Darstellung von drei verschiedenen Ausführungsformen auf den Gleitkopf 4 und einen Gleitkopf 4.4 und 4.5 mit entsprechenden Airline-Schienen 5, 5.4, 5.5, aus einer Sicht schräg von oben,
Figur 10 drei unterschiedliche Ausführungsformen eines Verbindungsteils 8, 8.3, 8.4 aus einem Blickwinkel schräg von oben.

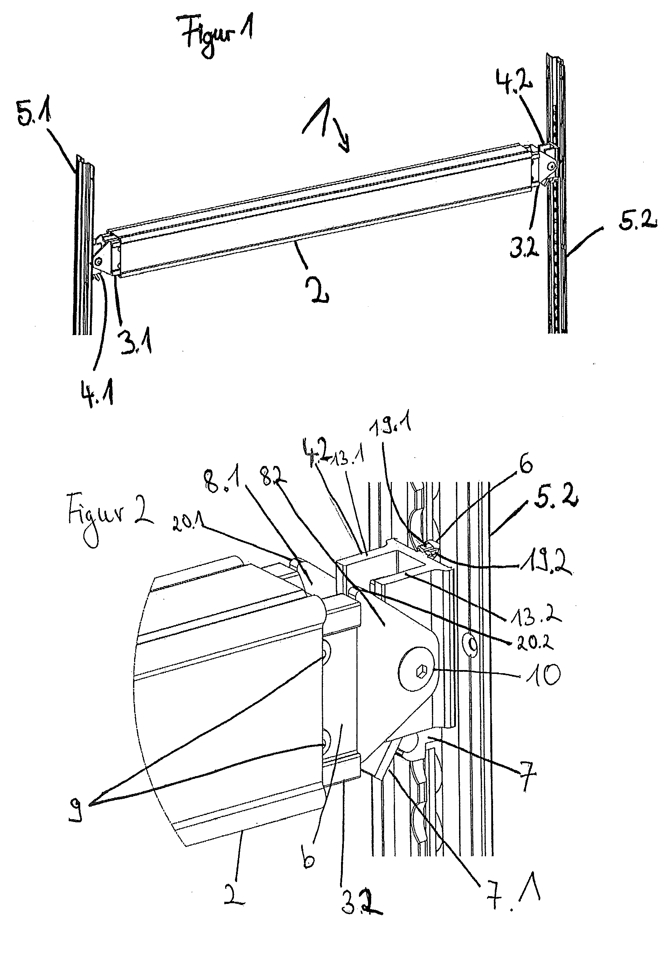

In Figur 1 ist ein erfindungsgemässer Ladebalken 1 dargestellt. Der erfindungsgemässe Ladebalken 1 ist aus einem Lastprofil 2 und zwei Teleskopelementen 3.1 und 3.2 aufgebaut. Diese Teleskopelemente 3.1 und 3.2 sind jeweils endseitig in dem Lastprofil 2 teleskopförmig angeordnet.

An den Teleskopelementen 3.1 und 3.2 ist jeweils ein Gleitkopf 4.1 und 4.2 angeordnet. Über die Gleitköpfe 4.1 und 4.2 wird der Ladebalken 1 mit entsprechenden Airline-Schienen 5.1 und 5.2 reversibel verbunden. Die Airline-Schienen 5.1 und 5.2 sind an nicht dargestellten Wänden oder Verankerungssegmenten eines ebenfalls nicht dargestellten Transport- oder Lagerraums verankert.

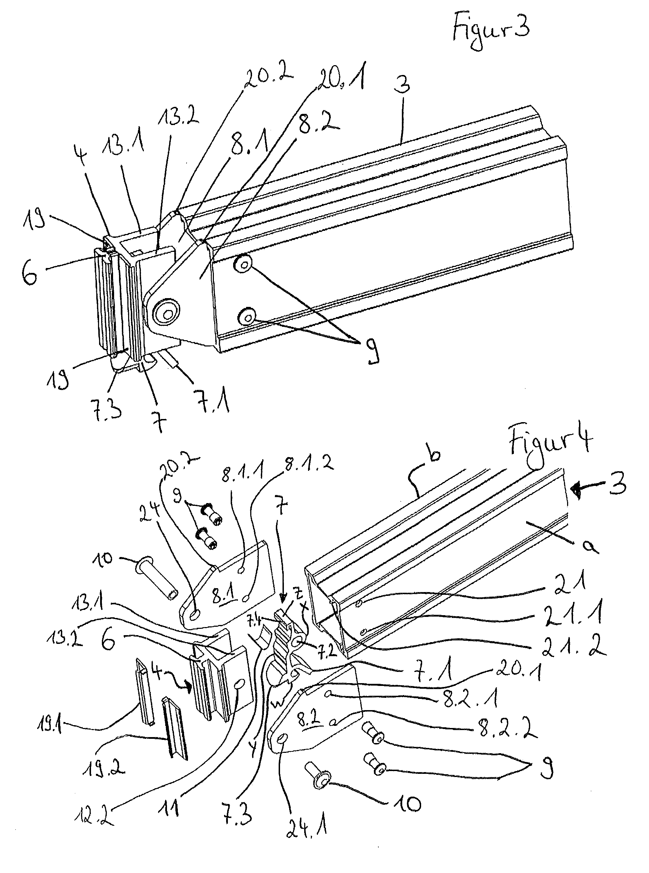

In Figur 2 ist ein vergrösserter Ausschnitt aus Figur 1 auf den Gleitkopf 4.2 des Ladebalkens 1 zu sehen. Das in dem Lastprofil 2 teleskopförmig angeordnete Teleskopelement 3.2 ist über zwei Verbindungsteile 8.1 und 8.2, diese sind in Figur 4 näher beschrieben, jeweils mit einer Haltewand 13.1 und 13.2 des Gleitkopfs 4.2 verbunden. Diese Verbindung ist schwenkbar und wird über eine Verschraubung mittels einer Bolzen-Schrauben-Kombination 10 mit Innensechskant, siehe Figur 4, ermöglicht. Diese Bolzen-Schrauben-Kombination 10 mit Innensechskant reicht durch das Verbindungsteil 8.2, die Haltewand 13.2 des Gleitkopfs 4.2, durch ein Lager 7.2 (siehe Figur 4) eines Fixierelements 7, durch die Haltewand 8.2 des Gleitkopfs 4.2 und durch das Verbindungsteil 8.1. Die Bolzen-Schrauben-Kombination 10 ermöglicht einen problemlosen Austausch des Gleitkopfes 4.2, um flexibel auf verschiedene Airline-Schienen oder andere Schienensysteme reagieren zu können.

Die Verbindungsteile 8.1 und 8.2 sind bis zu einer Anschlagkontur 20.1 und 20.2 vertikal zur Airline-Schiene 5.2 in das Teleskopelement 3.2 eingeschoben und dort mit den Aussenseiten a und b mit jeweils mit zwei Verbindungselementen 9 verbunden.

Der Gleitkopf 4.2 ist mit einem Gleitschuh 6 in der Airline-Schiene 5.2 angeordnet und ist dort reversibel über das Fixierelement 7 eingerastet. Das Fixierelement 7 ist zwischen den beiden Haltewänden 13.1 und 13.2 des Gleitkopfs 4.2 angeordnet und verfügt über eine Federung. Über das gefederten Fixierelement 7 wird die Einrastposition des Gleitkopfs 4.2 über eine in dieser Darstellung nicht zu erkennende halbrunde Nase 7.3 (siehe Figuren 3 und 4), in der Airline-Schiene 5.2 eingestellt. Über eine schalterförmige Ausformung 7.1 wird das Fixierelement 7 von Hand bedient, sodass die halbrunde Nase 7.3 in der Airline-Schiene 5.2 ein- und ausrasten kann.

In Figur 3 ist ein Gleitkopf 4 zu sehen, der über die Verbindungsteile 8.1 und 8.2 mit einem Teleskopelement 3 verbunden ist.

Eine weitere Unterscheidung gleicher Elemente durch Bezugszeichen erfolgt folgend nur noch dann, wenn diese in der einen Figur mehrfach auftreten oder es für die Beschreibung erforderlich ist. Bei der Benennung identischer Bezugsziffern in unterschiedlichen Figuren, sollen die Offenbarungen der einen Figuren auch für die anderen Figuren dienen.

In der Darstellung sind das Lastprofil 2 und die Airline-Schiene 5 nicht dargestellt. Dadurch ist der Gleitschuh 6 des Gleitkopfs 4 mit den paarweise eingesetzten Gleitstücken 19 zu erkennen. Darüber hinaus ist die halbrunde Nase 7.3 des Fixierelements 7 zu sehen, über welche die reversible Einrastposition in einer nicht dargestellten Airline-Schiene 5 bis 5.5 eingestellt wird.

Figur 4 ist eine Explosionszeichnung, in der die einzelnen Elemente, die auch in Figur 3 dargestellt wurden unverdeckt abgebildet sind.

Das Teleskopelement 3 verfügt an der Seite a über zwei Bohrungen 21 und 21.1. An der Seite b sind ebenfalls zwei Bohrungen 21.2 und 21.3 angeordnet, letztere ist darstellungsbedingt nicht zu sehen. Die Seiten a und b sind gegenseitig zueinander angeordnet. Über die Bohrungen 21, 21.1, 21.2, 21.3 wird das Teleskopelement 3 mit den Verbindungsteilen 8.1 und 8.2 und den dort angeordneten Bohrungen 8.1.1, 8.1.2, 8.2.1, 8.2.2 über jeweils ein Verbindungselement 9 verbunden.

Das Verbindungsteil8.1 bzw. 8.2 wird dazu an der Innenseite der Seite b bzw. a des Teleskopelements 3 mit der rechteckigen Seite bis zu der Anschlagkontur 20.2 bzw. 20.1 eingeschoben, sodass die Bohrungen 21.2 und 21.3 bzw. 21 und 21.1 über den Bohrungen 8.1.1 und 8.1.2 bzw. 8.2.1 und 8.2.2 liegen. Durch die übereinanderliegenden Bohrungen 21.2 und 21.3 bzw. 21 und 8.1.1 und 8.1.2 bzw. 8.2.1 und 8.2.2 wird dann jeweils eine Verbindungselement 9 getrieben.

Die der rechteckigen Seite gegenüberliegende Seite des Verbindungsteils 8.1 bzw. 8.2 läuft trapezähnlich zu und verfügt über eine Bohrung 24 bzw. 24.1.

Der Gleitkopf 4 verfügt an seinen Haltewänden 13.1 und 13.2 jeweils über eine Bohrung 12.1 und 12.2, erstere ist darstellungsbedingt nicht zu sehen. Die Bohrungen 12.1 und 12.2 weisen einen Durchmesser auf, der den Bohrungen 24 und 24.1 der Verbindungsteile 8.1 und 8.2 entsprechen.

Das Fixierelement 7 ist hier ebenfalls unverdeckt dargestellt. Das Fixierelement 7 verfügt an der Kante zwischen der Oberseite z und der Seite y über eine Ferderaufnahme 7.4. In dieser Ferderaufnahme 7.4 ist eine V-förmige Feder 11 angeordnet. Diese Feder 11 ermöglicht in Verbindung mit dem als Widerlager fungierenden Gleitkopf 4 eine Federung des Fixierelements 7.

Das Fixierelement 7 verfügt an der Seite x über ein Lager 7.2 durch welches er über eine Verschraubung mittels Bolzen-Schrauben-Kombination 10 drehbeweglich zwischen den beiden Haltewänden 13.1 und 13.2 des Gleitkopfs 4 und den beiden Verbindungsteilen 8.1 und 8.2 gehalten wird.

An der Unterseite w ist an der Kante zu der Seite x eine schalterförmige Ausformung 7.1 angeordnet, über welche das Fixierelement 7 händisch bewegt werden kann. Der schalterförmigen Ausformung 7.1 liegt eine halbrunde Nase 7.3 an der Seite y gegenüber. Diese halbrunde Nase 7.3 entspricht den Ausformungen in der Airline-Schiene 5 und ermöglicht dort eine reversibles Ein- und Ausrasten in der gewünschten Position.

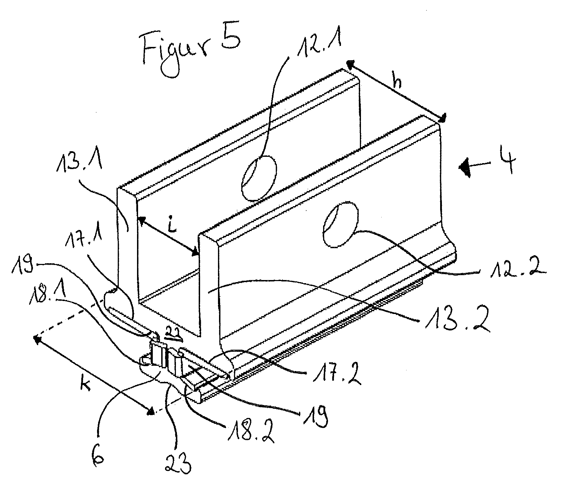

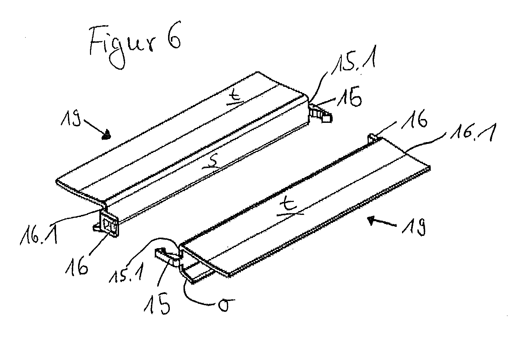

Der dargestellte Gleitkopf 4 und das Paar Gleitstücke 19.1 und 19.2 werden in den folgenden Figuren 5 und 6 detailliert beschrieben.

In Figur 5 ist der Gleitkopf 4 zu sehen. Er verfügt über zwei Haltewände 13.1 und 13.2. Die Haltewände 13.1 und 13.2 verfügen über jeweils eine Bohrung 12.1 und 12.2. Der Abstand h der Aussenkanten der Haltewände 13.1 und 13.2 ist derart, dass diese mit Spiel zwischen die nicht dargestellten Verbindungsteile 8.1 und 8.2 geschoben werden können, siehe Figur 3. Der Abstand i der Innenkanten der Haltewände 13.1 und 13.2 ist derart, dass das Fixierelement 7 mit Spiel dazwischen passt, sodass das Lager 7.2 zwischen den Bohrungen 12.1 und 12.2 liegt, siehe ebenfalls Figur 3.

Das Gleitstück 19 ist an dem Gleitkopf 4 reversibel befestigt. Der Gleitkopf 4 besteht aus einem U-Profil, wobei das U-Profil über einen Steg den Gleitschuh 6 ausbildet. Das Gleitstück 19 deckt den Steg, den dem U-Profil zugewandten Bereich des Gleitschuhs 6 und die dem Gleitschuh 6 zugewandte Seite des Gleitkopfs 4 im Wesentlichen ab. Hier kommen zwei Gleitstücke 19 zum Einsatz. Es ist aber auch denkbar, dass ein anderes Gleitstück bestehend aus den beiden Gleitstücken 19 endseitig über einen Materialstreifen miteinander verbunden sind und somit eine U-Form aufweist, welcher mit der geöffneten Seite über den Steg bringbar ist.

Die Haltewände 13.1 und 13.2 sind auf der Basis 22 des Gleitkopfs 4 angeordnet, sodass auf dieser Seite eine U-Form entsteht.

Der Abstand k der Aussenkanten der Basis 22 ist grösser als der Abstand h der Aussenkanten der Haltewände 13.1 und 13.2. Dadurch entsteht ein jeweils von den Aussenkanten der Haltewände 13.1 und 13.2 ausgehender geschwungener Überstand.

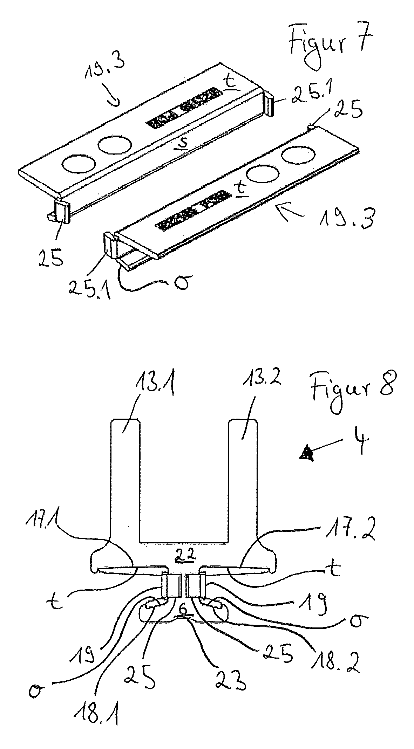

Auf der Seite der Basis 22, die den Haltewänden 13.1 und 13.2 gegenüber liegt, ist der Gleitschuh 6 T-förmig ausgeformt. Auf der Seite der Basis 22 an der der Gleitschuh 6 angeordnet ist, sind beidseitig Aussparungen 17.1 und 17.2 gegeben. Weitere Aussparungen 18.1 und 18.2 befinden sich an der Innenseite des Gleitschuhs 6. Die Aussparungen 17.1, 17.2, 18.1, 18.2 ermöglichen den passgenauen Einsatz der Gleitstücke 19. Unterschiedliche Ausführungsformen der Gleitstücke 19 werden in Figur 6 und 7 detailliert beschrieben.

Der Gleitschuh 6 weist zudem eine Nut 23 auf. Diese trägt zu einer verringerten Reibung in der Airline-Schiene 5 bei.

Figur 6 zeigt zwei Gleitstücke 19 als Paar für den Einsatz in den Gleitschuh 6 des Gleitkopfes 4. Das Gleitstück 19 ist aus einem tribologisch günstigen Kunststoff gefertigt und weist im Profil eine J-Form auf. Das Gleitstück 19 verfügt an der Kante 15.1 der Seite s über einen Haken 15 und an der Kante 16.1 der Seite s über eine Öse 16. Der Haken 15 und die Öse 16 stehen dabei in einem Winkel von zirka 90° von der Seite s ab. Die Öse 16 ist derart ausgeformt, dass der Haken 15 eines weiteren Gleitstücks 19 dort formschlüssig und reversibel eingeclipst werden kann.

Figur 7 zeigt ein weiteres Ausführungsbeispiel eines erfindungsgemässen Gleitstücks 19.3. Dargestellt ist ebenfalls ein Paar. In diesem Ausführungsbeispiel sind die Haken 15 und die Ösen 16 des Gleitstücks aus Figur 6 modifiziert und bilden ein variierendes Clipssystem, welches auf ineinandergreifenden Angeln 25 und 25.1 basiert.

Figur 8 zeigt einen Gleitkopf 4 mit einem angesetzten Paar Gleitstücke 19 des Ausführungsbeispiels aus Figur 7 im Profil. Eine Seite t der Gleitstücke 19 liegt in der Aussparung 17.1 bzw. 17.2, eine Seite o liegt in der Aussparung 18.1 bzw. 18.2.

Die Angeln 25 und 25.1 umfassen dabei die schmalste Stelle des Gleitschuhs 6 und bilden eine reversible Clipsverbindung. Dadurch werden die Gleitstücke 19 an der vorgesehenen Position gehalten. Die Verbindung zwischen den Angeln 25 und 25.1 kann nach Abnutzung des jeweiligen Gleitstücks 19 wieder getrennt werden um ein neues Gleitstückpaar einzusetzen.

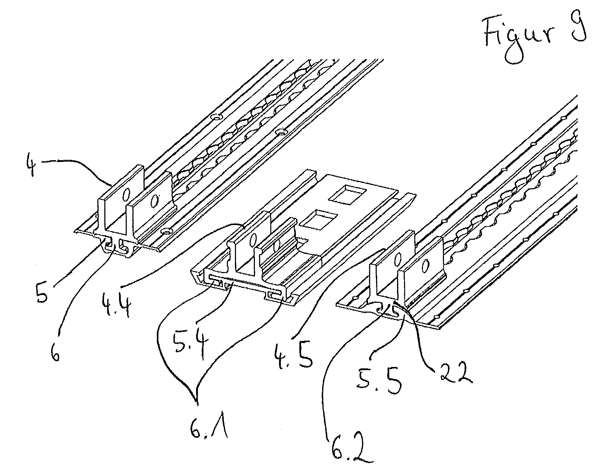

Figur 9 zeigt drei unterschiedliche Ausführungsformen eines Gleitkopfs 4, 4.4, 4.5. Die jeweilige Ausführungsform der Gleitköpfe 4, 4.4, 4.5 richtet sich nach den unterschiedlichen Typen von Airline-Schienen 5, 5.4, 5.5. Wesentliche Unterschiede liegen dabei in der Ausformung des jeweiligen Gleitschuhs 6, 6.1, 6.2, der an die unterschiedlichen Airline-Schienen 5, 5.4, 5.5 angepasst ist.

Der dargestellte Gleitkopf 4.4 verfügt beispielsweise über einen zweigeteilten Gleitschuh 6.1. Bei dem Gleitkopf 4.5 ist die Basis 22 beispielsweise passend konkav zur konvex gewölbten Airline-Schiene 5.5 ausgeformt.

Entsprechend der unterschiedlichen Ausführungsbeispiele der Gleitköpfe 4, 4.4, 4.5 sind auch unterschiedlich Ausführungsformen der Gleitstücke 19 vorgesehen. Neben diesen beispielhaft dargestellten Ausführungsbeispielen sind darüber hinaus weitere Ausführungsformen möglich.

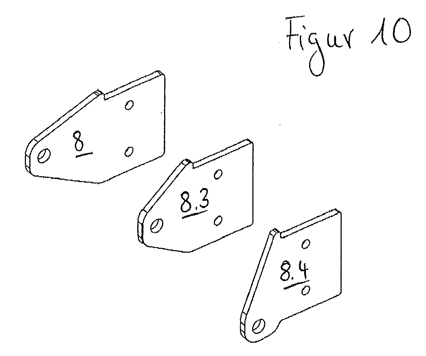

Figur 10 zeigt drei Ausführungsbeispiele eines Verbindungsteils 8, 8.3, 8.4. Diese Verbindungsteile sind entsprechend der unterschiedlichen Ausführungsformen der Gleitköpfe 4, 4.4, 4.5 bzw. der Airline-Schienen 5, 5.4, 5.5, wie in Figur 9 dargestellt, ausgeformt. Es sind weiterte Ausführungsformen in Bezug zu weiteren Gleitköpfen bzw. Airline-Schiene denkbar.

**Bezugszeichenliste**

| | | | |
|---|---|---|---|
| 1 | Ladebalken | 24,24.1 | Bohrung |
| 2 | Lastprofil | 25, 25.1 | Angel |
| 3, 3.1, 3.2 | Teleskopelement | a | Seite Teleskopelement |
| 4, 4.1, 4.2, 4.4,4.5 | Gleitkopf | b | Seite Teleskopelement |
| 5, 5.1, 5.2, 5.4, 5.5 | Airline-Schiene | h | Abstand |
| 6,6.1,6.2 | Gleitschuh | i | Abstand |
| 7 | Fixierelement | k | Abstand |
| 7.1 | schalterförmige Ausformung | s | Seite Gleitstück |
| 7.2 | Lager | t | Seite Gleitstück |
| 7.3 | halbrunde Nase | o | Seite Gleitstück |
| 7.4 | Federaufnahme | x | Seite Fixierelement |
| 8, 8.1, 8.2, 8.3, 8.4 | Verbindungsteil | y | Seite Fixierelement |
| 8.1.1, 8.1.2, 8.2.1, 8.2.2 | Bohrung | z | Oberseite Fixierelement |
| 9 | Verbindungselement | w | Unterseite Fixierelement |
| 10 | Bolzen-Schrauben-Kombination | | |
| 11 | Feder | | |
| 12.1, 12.2 | Bohrung | | |
| 13.1,13.2 | Haltewand | | |
| 15 | Haken | | |
| 15.1 | Kante | | |
| 16 | Öse | | |
| 16.1 | Kante | | |
| 17.1,17.2 | Aussparung | | |
| 18.1, 18.2 | Aussparung | | |
| 19,19.1, 19.2, 19.3 | Gleitstück | | |
| 20.1, 20.2 | Anschlagkontur | | |
| 21,21.1, 21.2,21.3 | Bohrung | | |
| 22 | Basis | | |
| 23 | Nut | | |
| | | | |

## Patentansprüche

1. Ladebalken (1) für Laderäume oder -flächen zum Verfahren und reversiblem Anordnen in bzw. an einer Airline-Schiene (5, 5.1, 5.2, 5.4, 5.5), bestehend aus einem Lastprofil (2) und einem in dem Lastprofil (2) teleskopförmig angeordneten Teleskopelement (3, 3.1, 3.2), wobei das Teleskopelement (3, 3.1, 3.2) einen schwenkbaren Gleitkopf (4, 4.1, 4.2, 4.4, 4.5) umfasst, wobei der Gleitkopf (4, 4.1, 4.2, 4.4, 4.5) einen Gleitschuh (6, 6.1, 6.2) ausbildet, wobei der Gleitschuh (6, 6.1, 6.2) derart gestaltet ist, dass er in der Führung der Airline-Schienen (5, 5.1, 5.2, 5.4, 5.5) zu verfahren ist,
**gekennzeichnet dadurch,**
**dass** der Gleitschuh (6, 6.1, 6.2) des Gleitkopfs (4, 4.1, 4.2, 4.4, 4.5) zumindest ein Gleitstück (19, 19.1, 19.2, 19.3) umfasst.

2. Ladebalken (1) nach Anspruch 1, **dadurch gekennzeichnet, dass** das Gleitstück (19, 19.1, 19.2, 19.3) aus einem tribologisch günstigen Werkstoff, vorzugsweise einem Kunststoff, besteht.

3. Ladebalken (1) nach einem der Ansprüche 1 oder 2, **dadurch gekennzeichnet, dass** das Gleitstück (19, 19.1, 19.2, 19.3) an dem Gleitkopf (4, 4.1, 4.2, 4.4, 4.5) reversibel befestigt ist.

4. Ladebalken (1) nach einem der vorigen Ansprüche, **dadurch gekennzeichnet, dass** der Gleitkopf (4, 4.1, 4.2, 4.4, 4.5) aus einem U-Profil besteht, wobei das U-Profil über einen Steg den Gleitschuh (6, 6.1, 6.2) ausbildet, wobei das Gleitstück (19, 19.1, 19.2, 19.3) den Steg, den dem U-Profil zugewandten Bereich des Gleitschuhs (6, 6.1, 6.2) und die dem Gleitschuh (6, 6.1, 6.2) zugewandte Seite des Gleitkopfs (4, 4.1, 4.2, 4.4, 4.5) im Wesentlichen abdeckt.

5. Ladebalken (1) nach einem der Ansprüche 1 bis 4, **dadurch gekennzeichnet, dass** der Gleitkopf (4, 4.1, 4.2, 4.4, 4.5) austauschbar ist.

6. Ladebalken (1) nach einem der Ansprüche 1 bis 5, **dadurch gekennzeichnet, dass** der Gleitkopf (4, 4.1, 4.2, 4.4, 4.5) ein Fixierelement (7) umfasst.

7. Ladebalken (1) nach Anspruch 6, **dadurch gekennzeichnet, dass** das Fixierelement (7) eine Feder (11) und ein Lager (7.2) umfasst.

8. Ladebalken (1) nach einem der vorherigen Ansprüche, **dadurch gekennzeichnet, dass** der Gleitkopf (4, 4.1, 4.2, 4.4, 4.5) eine erste Haltewand (13.1) und eine zweite Haltewand (13.2) umfasst.

9. Ladebalken (1) nach einem der vorherigen Ansprüche, **dadurch gekennzeichnet, dass** das Teleskopelement (3, 3.1, 3.2) ein erstes Verbindungsteil (8, 8.1, 8.3, 8.4) und ein zweites Verbindungsteil (8, 8.2, 8.3, 8.4) umfasst.

10. Ladebalken (1) nach einem der vorherigen Ansprüche, **dadurch gekennzeichnet, dass** das Gleitstück (19, 19.1, 19.2, 19.3) mit einem Haken (15) oder einer Angel (25.1) versehen ist, welche mit einer Öse (16) oder einer Angel (25) eines weiteren Gleitstücks (19, 19.1, 19.2, 19.3) formschlüssig und reversibel in Wirkverbindung bringbar sind.
